**Europäisches Patentamt**

**European Patent Office**

**Office européen des brevets**

(19)

(11) Numéro de publication: **0 177 381**
**B1**

(12) **FASCICULE DE BREVET EUROPEEN**

(45) Date de publication du fascicule du brevet:
08.02.89

(51) Int. Cl.⁴: **C 08 J 9/14,** C 08 K 5/02,
C 08 L 75/04, C 08 L 79/04,
C 08 G 18/50, C 08 G 18/38

(21) Numéro de dépôt: 85401643.3

(22) Date de dépôt: 13.08.85

(54) **Compositions homogènes à base de composés polyhydroxylés halogénés et d'alcanes halogénés, leur application à la fabrication de mousses rigides.**

(30) Priorité: 22.08.84 FR 8413054

(43) Date de publication de la demande:
09.04.86 Bulletin 86/15

(45) Mention de la délivrance du brevet:
08.02.89 Bulletin 89/6

(84) Etats contractants désignés:
BE DE FR GB IT NL SE

(56) Documents cités:
AT-A- 330 468
FR-A- 2 083 540
FR-A- 2 180 138
GB-A- 821 342
US-A- 3 305 497

(73) Titulaire: ATOCHEM, 4 & 8, Cours Michelet La
Défense 10, F-92800 Puteaux (FR)

(72) Inventeur: **Bonnet, Evelyne, 18 Grande Avenue,**
**F-60260 Lamorlaye (FR)**
Inventeur: **Tilquin, Francois, 21 square Guillaume**
**Apollinaire, F-95240 Cormeilles en Parisis (FR)**

(74) Mandataire: **Foiret, Claude et al, ATOCHEM**
**Département Propriété Industrielle, F-92091 Paris la**
**Défense 10 Cédex 42 (FR)**

## Description

La présente invention est relative à des compositions homogènes utilisées dans la fabrication de mousses rigides de polyuréthannes et/ou de polyisocyanurates et plus particulièrement de mousses utilisées dans des domaines nécessitant une bonne résistance au feu comme la décoration, le bâtiment ou les transports. L'objet de l'invention concerne des compositions homogènes constituées de composés polyhydroxylés halogénés et d'alcanes halogénés maintenus sous forme de microémulsion au moyen d'un tensio-actif.

Pour la fabrication de mousses rigides de polyuréthannes et/ou polyisocyanurates ayant une bonne résistance au feu, il est connu d'utiliser des composés halogénés polyhydroxylés présentant une bonne réactivité vis-à-vis des isocyanates. Pour ce genre d'application on préfère les composés polyhydroxylés de bas poids moléculaire possédant au moins deux fonctions hydroxylés par molécule mais de préférence 3 ou 4, et un indice d'hydroxyle ou moins égal à 250 mais de préférence compris entre 300 et 600. Par ailleurs afin d'obtenir des mousses rigides ayant de bonnes propriétés ignifugeantes, c'est-à-dire des valeurs d'indice d'oxygène limite (IOL), selon la norme NF 51.071, supérieures à 26 et mieux supérieures à 28 il est recommandé d'utiliser des polyols halogénés ayant une teneur en halogène et plus particulièrement en brome aussi élevée que possible et de préférence de 35 à 45% en poids. De tels composés sont décrits dans de nombreux brevets comme par exemple dans les brevets français 1 350 425, 2 180 138, 1 401 803, 2 229 680, ainsi que dans le brevet US 3 385 900. Ils sont également décrits dans la littérature comme par exemple dans Flame Retardancy of Polymeric Matérials, vol. 3 édité par W. C. Kuryla et A. J. Papa, concernant en particulier l'ignifugation des mousses de polyuréthannes.

Ces mousses rigides sont obtenues par réactions d'au moins un composé halogéné polyhydroxylé avec un polyisocyanate en présence d'un agent porogène. Ces agents porogènes sont choisis dans la famille des alcanes halogénés, en général chlorés chlorés et/ou fluorés contenant de 1 à 3 atomes de carbone comme par exemple le chlorure de méthylène ou les fréons comme le trichlorofluorométhane, le dichlorodifluorométhane ou le trichlorotrifluoroéthane. L'incorporation de ces alcanes halogénés dans les formulations pour mousses rigides n'est pas facile en raison de leur incompatibilité avec le mélange des autres constituants ce qui a pour conséquence une mauvaise émulsification des constituants du mélange et le plus souvent une démixtion très rapide de l'agent porogène. Ce phénomène est observé en particulier dans les formulations à base de polyols des bas poids moléculaire fortement halogénés et faiblement oxyalkylénés surtout les polyols faiblement oxypropylénés ou pas oxypropylénés du tout. Avec un tel système hétérogène entraînant le plus souvent la séparation des constituants de base et de l'agent d'expansion, il est difficile de fabriquer des mousses rigides de bonne qualité du fait du manque de répartition uniforme des effets de chacun des constituants. Le comportement technologique des systèmes ainsi constitués n'est pas satisfaisant.

Le brevet US 3 305 497 décrit un procédé de fabrication de mousse de polyuréthanne (colonne 8 lignes 8–19) par mélange d'un polyol, d'un agent gonflant et d'un surfactant avec un polyisocyanate. Le terme «surfactants» est explicité en colonne 7 lignes 63–67. Ce surfactant est un stabilisant de la mousse qui doit prévenir sa friabilité avant le durcissement (curing). On ne décrit nulle part la microémulsion de la présente invention. Le procédé illustré en partie B colonne 10 se retrouve dans nos exemples comparatifs 23 et 24, on utilise une huile silicone et il est impossible d'obtenir une microémulsion stable. L'utilisation de l'huile silicone ne permet pas d'obtenir une microémulsion stable de polyol et d'agent gonflant.

Le brevet FR 2 083 540 décrit le mélange d'un polyéther-polyol très visqueux avec du glycol, ledit mélange étant ensuite mis en contact avec un polyisocyanate pour faire des mousses de polyuréthanne. Dans l'exemple 1 on retrouve une huile silicone, appelée «tensio-actif». Bien que cette huile silicone contienne des motifs oxyéthylénés, ce n'est pas un tensio-actif comme dans la présente invention.

Selon la présente invention on remédie à cet inconvénient en mélangeant le composé polyhydroxylé halogéné en présence d'un tensio-actif. Par simple agitation on obtient une composition homogène se présentant sous forme de microémulsion stable qui non seulement facilite sa mise en œuvre, mais encore évite la démixtion du mélange avec le polyisocyanate et les autres éventuels additifs comme le catalyseur, l'eau, les agents de stabilité dimentionnelle, ou mêmes des agents ignifugeants complémentaires, tels les additifs phosphorés ou phosphohalogénés. En particulier la miscibilité des polyols fortement halogénés ou des polyéthers polyols halogénés faiblement oxypropylénés particulièrement appropriés pour la fabrication de mousses rigides de polyuréthannes et/ou de polyisocyanurates ayant une bonne tenue au feu peut être assurée ou améliorée par addition de quelques parties en poids de tensio-actif.

Les tensio-actifs répondant à l'objet de l'invention peuvent être choisis dans les familles des non ioniques, des ioniques: anioniques ou cationiques, ou des amphotères, ou des amphotères. Parmi les tensio-actifs non ioniques les classes de produits préférés sont les agents de surface non ioniques à liaison éther alkylphénols polyoxyéthylénés et alcools polyoxyéthylénés, les agents de surface non ioniques copolymères d'oxydes d'alkylène. Parmi les agents de surface non ioniques à liaison éther tels que alkylphénols polyoxyéthylénés une classe de produits préférée est la série des nonylphénols polyéthylénés avec de préférence un nombre moyen n de motifs oxyde d'éthylène par motif nonylphénol compris entre 1,5 et 20. Dans la famille des alcools polyoxyéthylénés, les alcools préférés sont du type éthylhexanol ou alcools de synthèse à chaîne carbonée $C_{13} - C_{15}$, $C_9 - C_{11}$ avec de préférence un nombre moyen n de motifs d'oxyde d'éthylène par motif alcool compris entre 2 et 25. Parmi les agents du surface non ionique copolymères d'oxydes d'alkylène une classe de produits préférée est constituée par les produits de la série des copolymères d'oxyde de propylène et d'oxyde d'éthylène, d'éthylène glycol et de propylène glycol. Parmi les agents de surface dérivés constituée par la famille des phosphates d'alcools éthoxylés. Parmi les agents de surface ioniques une classe préférée de produits est constituée par la famille des sulfonates tels que les sulfonates de pétrole ou les alkylarylsulfonates de pétrole ou les alkylarylsulfonates de sodium.

Le choix du tensio-actif ne relève pas directement de règles bien établies, mais d'une approche dérivée des concepts connus, accessibles à l'homme de métier, de HLB (hydrophile-lipophile balance) et de HLB requis introduits par Griffin (The HLB System – notice ICI 1976) ainsi que de EACN (Equivalent Alcane Carbone Number) introduit par Schechter (Université de Austin – Texas – Rapport Annuel 1975). Ces notions sont directement liées à la structure des constituants de base comme le composé polyhydroxylé halogéné, l'agent ignifugeant complémentaire éventuellement ajouté tel l'additif phosphoré ou phosphohalogéné, l'agent porogène. Ces notions sont également liées à la proportion de chacun des constituants de la composition.

Les compositions selon l'invention conviennent particulièrement à la fabrication de mousses rigides à partir du diphénylméthane 4,4' diisocyanate (MDI) et/ou de polyméthylènepolyphénylisocyanate (PMPI).

Pour accélérer la réaction de formation de la mousse on peut ajouter au mélange réactionnel un catalyseur connu choisi par exemple parmi les sels métalliques et plus particulièrement parmi les N-alkylamines, N-alkylmorpholines, les sels de potassium ou de sodium comme l'acétate, les sels d'étain comme l'octoate stanneux, le diacétate de dibutylétain et le dilaurate de dibutylétain. On peut également ajouter au mélange réactionnel des agents permettant d'assurer la stabilité dimensionnelle de la mousse en cours d'expansion; parmi les plus connus et les plus utilisés on peut citer les composés organiques du silicium comme les polyéthers silicones.

Les microémulsions obtenues, stables et ne décantant pas, permettent une mise on œuvre aisée, un mélangeage des constituants plus rapide, une meilleure émulsification, une fluidité améliorée du mélange, un temps de séchage plus court de la mousse après expansion et d'une manière générale de meilleures propriétés physico-chimiques des matériaux cellulaires obtenus.

Les exemples suivants illustrent l'invention.

Exemple 1

90 g d'un composé polyhydroxylé halogéné obtenu par addition d'éther alkyl glycidique bromé et d'épichlorhydrine sur la glycérine et possédant les caractéristiques suivantes:

Fonctions OH/kg = 7
Poids moléculaire moyen $\overline{Mn}$ = 430
% Br en poids = 32,2
% Cl en poids = 8,1

sont additionnés 10 g de trichloroisopropyl phosphate et de 10 g de nonylphénol éthoxylé à 1,5 OE (oxyde d'éthylène). On homogénéise puis on ajoute 30 g de trichlorofluorométhane (fréon 11), par simple agitation on obient une microémulsion stable.

Exemple 2

90 g d'un composé polyhydroxylé halogéné obtenu par additon d'éther allyl glycidique bromé sur la glycérine et possédant les caractéristiques suivantes:

Fonctions OH/kg = 6
Poids moléculaire moyen $\overline{Mn}$ = 500
% Br en poids = 45,1

sont additionnés de 10 g de trichloroisopropyl phosphate et de 10 g de nonylphénol éthoxylé à 1,5 OE. On homogénéise puis on ajoute 30 g de trichlorofluorométhane, par simple agitation on obtient une microdispersion stable.

Exemple 3

90 g du composé polyhydroxylé halogéné de l'exemple 1 sont additionnés de 10 g de diméthylméthylphosphate et de 10 g de néopentylglycol éthoxylé à 20 OE. On homogénéise puis on ajoute 30 g de trichlorofluorométhane, par simple agitation on obtient une microdispersion stable.

Exemple 4

90 g d'un composé polyhydroxylé halogéné (IXOL B 251) possédant les caractéristiques suivantes:

Fonctions OH/kg = 5,9
% Br en poids = 32
% Cl en poids = 6,5

sont additionnés de 10 parties de diméthylméthylphosphonates et de 10 parties de néopentylglycol éthoxylé à 7 OE. On homogénéise puis an ajoute 30 g de trichlorofluorométhane. Par simple agitation on obtient une microémulsion stable.

Exemple 5

90 g du composé polyhydroxylé halogéné de l'exemple 2 sont additionnés de 10 g de diméthylphosphonate et de 10 parties d'un monoalcool polyoxyéthylé à chaîne carbonée en $C_{13} - C_{15}$ à 2 motifs d'oxyde d'éthylène. On homogénéise puis on ajoute 30 g de trichlorofluorométhane. Par simple agitation on obtient une microémulsion stable.

Exemple 6

90 g du composé polyhydroxylé halogéné de l'exemple 1 sont additionnés de 10 g de trichloroisopropyl phosphate et de 10 g d'un monoalcool polyéthoxylé à chaîne carbonée en $C_{13} - C_{15}$ à 7 motifs d'oxyde d'éthylène. On homogénéise puis on ajoute 30 g de trichlorofluorométhane. Par simple agitation on obtient une microémulsion stable.

Exemple 7

90 g du composé polyhydroxylé halogéné de l'exemple 4 sont additionnés de 10 g de méthyl méthylphosphonate et de 10 g d'un monoalcool polyéthoxylé à chaîne carbonée en $C_{13} - C_{15}$ à 25 motifs d'oxyde d'éthylène. On homogénéise puis on ajoute 30 g de trichlorofluorométhane. Par simple agitation on obtient une microdispersion stable.

Exemple 8

90 g du composé polyhydroxylé halogéné de l'exemple 4 sont additionnés de 10 g de trichloro-isopropylphosphate et de 10 g de trichloroisopropylphosphaté et de 10 g d'un monoalcool polyoxyéthyléné à chaîne carbonée en $C_9 - C_{11}$ à 6 motifs d'oxyde d'éthylène. On homogénéise puis on ajoute 30 g de trichlorofluorométhane. On obtient par simple agitation une microémulsion stable.

Exemple 9

90 g du composé polyhydroxylé halogéné de l'exemple 2 sont additionnés de 10 g de trichloro-isopropylphosphate et de 10 g d'un alcool oxyéthyléné à chaîne carbonée en $C_9 - C_{11}$ à neuf motifs d'oxyde d'éthylène. On homogénéise puis on ajoute 30 g de trichlorofluorométhane. On obtient par simple agitation une microémulsion stable.

Exemple 10

90 g du composé polyhydroxylé halogéné de l'exemple 4 sont additionnés de 5 g d'éthyhexanol oxyéthylèné à 4,5 motifs d'oxyde d'éthylène. On homogénéise puis on ajoute 30 g de trichlorofluorométhane. On obtient par simple agitation une microémulsion stable.

Exemple 11

90 g du composé polyhydroxylé halogéné de l'exemple 1 sont additionnés de 10 g de diméthylphosphonate et de 10 g d'éthylhexanol oxyéthyléné à 10 motifs d'oxyde d'éthylène. On homogénéise puis on ajoute 30 g de trichlorofluorométhane. Par simple agitation on obtient une microémulsion stable.

Exemple 12

90 g du composé polyhydroxylé halogéné de l'exemple 4 sont additionnés de 10 g de diméthyl méthylphosphonate et de 10 g du phosphate d'un monoalcool à chaîne carbonée en $C_{13} - C_{15}$ oxyéthyléné à 7 motifs d'oxyde d'éthylène. On homogénéise puis on ajoute 30 g de trichlorofluorométhane. On obtient par simple agitation une microémulsion stable.

Exemple 13

90 g du composé polyhydroxylé de l'exemple 4 sont additionnés de 10 g de diméthyl méthylphosphonate et de 5 g de propylène glycol propoxyléné de poids moléculaire de l'ordre de 1800 g avec un taux d'oxyde d'éthylène de 50% (Pluronic L 35). On homogénéise puis on ajoute 30 g de trichlorofluorométhane. Par simple agitation on obtient une microémulsion stable.

Exemple 14

90 g du composé plyhydroxylé halogéné de l'exemple 2 sont additionnés de 10 g de trichloroisopropyl phosphate et de 5 g de propylène glycol prpoxyléné et oxyéthyléné de poids moléculaire de l'ordre de 4300 g avec un taux d'oxyde d'éthylène de 30% (Pluronic P 103). On homogénéise puis on ajoute 30 g de trichlorofluorométhane. Par simple agitation on obtient une microémulsion stable.

Exemple 15

90 g du composé polyhydroxylé de l'exemple 4 sont additionnés de 10 g de dodécylbenzène sulfonate. On homogénéise puis on ajoute 30 g de trichlorofluorométhane. On obtient une microémulsion stable par simple agitation.

Exemple 16

90 g du composé polyhydroxylé de l'exemple 4 sont additionnés de 10 g de diméthylméthylphosphonate et de 10 g d'isotridécanol oxypropyléné à 5 motifs d'oxyde de propylène. On homogénéise puis on obtient une microémulsion stable.

Exemple 17

90 g du composé polyhydroxylé halogéné de l'exemple 4 sont additionnés de 10 g de trichloro-isopropylphosphate et de 10 g d'isotridécanol oxypropyléné à 5 motifs d'oxyde de propylène. On homogénéise puis on ajoute 30 g de trichlorofluorométhane. Par simple agitation on obtient une microémulsion stable.

Exemple 18

90 g du composé polyhydroxylé halogéné de l'exemple 4 sont additionnés de 10 g de diméthylméthylphosphonate et de 10 g de nonylphénol oxyéthyléné à 1,5 motif d'oxyde d'éthylène. On homogénéise puis on ajoute 30 g de trichlorotrifluoroéthane (fréon 113). Par simple agitation on obtient une microémulsion stable.

Exemple 19

90 g du composé polyhydroxylé halogéné de l'exemple 4 sont additionnés de 10 g de diméthylméthylphosphonate et de 10 g d'éthylhexanol oxyéthyléné à 10 motifs d'oxyde d'éthylène. On homogénéise puis on ajoute 30 g de trichlorotrifluoroéthane. Par simple agitation on obtient une microémulsion stable.

Exemple 20

100 g du composé polyhydroxylé de l'exemple 4 sont additionnés de 4,5 g d'éthyl hexanol oxyéthyléné à 1,5 motif d'oxyde d'éthylène, de 1 g d'eau, de 1,5 g de diméthylcyclohexylamine, de 1,5 g de silicone (silicone 8404). Le mélange est homogénéisé puis on ajoute 25 g de trichlorofluorométhane. Par simple agitation on obtient une microémulsion stable. On fabrique une mousse rigide de polyuréthanne ignifugée à partir de cette microémulsion par addition de 118 g de MDI brut (BLD 150). On obtient une mousse qui possède les caractéristiques suivantes:

    Densité: 31,8 g/l        Norme NF 56107
    Résistance en compression sens parallèle: 109 KPa        Norme NF 56101
    Résistance en compression sens perpendiculaire: 100 KPa        Norme NF 56101
    Indice d'Oxygène: 29,1        Norme NF 51071

**Exemple 21**

100 g du composé polyhydroxylé de l'exemple 1 sont additionnés de 6 g d'éthylhexanol oxyéthyléné à 1 motif d'oxyde d'éthylène, de 1 g d'eau, de 5 g de diméthyl méthylphosphonate, de 1 g de diméthylcyclohexylamine, de 1,5 g de silicone (silicone 8404). Le mélange est homogénéise puis on ajoute 25 g de trichlorofluorométhane. Par simple agitation on obtient une microémulsion stable. A partir de cette microémulsion on fabrique une mousse rigide de polyuréthanne ignifugée par addition de 135 g de MDI brut (BLD 150). On obtient une mousse rigide ignifugée qui possède les caractéristiques suivantes selon les mêmes normes que l'exemple 20.

    Densité: 32,3 g/l
    Résistance en compression sens parallèle: 154 KPa
    Résistance en compression sens perpendiculaire: 96 KPa
    Indice d'Oxygène: 29,4.

**Exemple 22**

100 g du composé polyhydroxylé de l'exemple 2 sont additionnés de 5 g d'un alcool à chaîne carbonée en $C_{13} - C_{15}$ oxyéthyléné à 2 motifs d'oxyde d'éthylène, de 20 g de trichloroisopropylphosphate, de 1 g d'eau, de 1 g de diméthylcyclohexylamine et de 1,5 g de silicone (silicone 8404). Le mélange est homogénéisé puis on ajoute 25 g de trichlorofluorométhane. Par simple agitation on obtient une microémulsion. A partir de cette microémulsion on fabrique une mousse rigide ignifugée par addition de 120 g de MDI brut (BLD 150) qui a les caractéristiques suivantes; selon les mêmes normes que l'exemple 20:

    Densité: 40 g/l
    Résistance en compression sens parallèle: 163 KPa
    Résistance en compression sens perpendiculaire: 83 KPa
    Indice d'Oxygène: 31,3.

**Exemple 23 (comparatif)**

100 g du composé polyhydroxylé de l'exemple 1 sont additionnés de 1 g d'eau, 5 g de silicone (silicone 8404) et de 25 g de trichlorofluorométhane. On homogénéise sous forte agitation. Dès que l'on cesse d'agiter on observe une séparation très nette du trichlorofluorométhane des autres constituants.

Par addition de 135 g de MDI brut (BLD 150) on obtient une mousse rigide de polyuréthanne de mauvaise qualité sur laquelle il n'est pas possible de déterminer les caractéristiques physiques usuelles.

**Exemple 24 (comparatif)**

100 g du composé polyhydroxylé halogéné de l'exemple 2 sont additionnés de 1 g d'eau, de 1 g de diméthylcyclohexylamine, de 1,5 de silicone (silicone 8404), 20 g de trichloroisopropylphosphate et 25 g de trichlorofluorométhane. On homogénéise sous forte agitation. Dès que l'on cesse d'agiter on observe une séparation très nette du trichlorofluorométhane des autres constituants.

Par addition de 135 g de MDI brut (BLD 150) on obtient une mousse rigide de polyuréthanne de mauvaise qualité sur laquelle il n'est pas possible de déterminer les caractéristiques physiques usuelles.

**Revendications**

1. Composition homogène stable constituée du mélange de composé polyhydroxylé halogéné et d'alcane halogéné caractérisé en ce qu'elle se présente sous forme de microémulsion et en ce qu'elle contient un tensio-actif choisi dans les familles des non ioniques, des ioniques: anioniques ou cationiques, des amphotères.

2. Procédé de fabrication de mousse rigide de polyuréthanne et/ou de polyisocyanurate par réaction de polyisocyanate avec une composition selon la revendication 1.

**Patentansprüche**

1. Homogene stabile Zusammensetzung, bestehend aus dem Gemisch einer polyhydroxylierten halogenierten Verbindung und eines halogenierten Alkans, dadurch gekennzeichnet, dass sie in Form einer Mikroemulsion vorliegt und dass sie eine oberflächenaktive Verbindung, ausgewählt aus den Familien der nichtionischen der ionischen, anionischen oder kationischen und der amphoteren Verbindungen, enthält.

2. Verfahren zur Herstellung eines festen Schaums aus Polyurethan und/oder Polyisocyanurat durch Reaktion von Polyisocyanat mit einer Zusammensetzung gemäss Anspruch 1.

**Claims**

1. Stable homogeneous composition consisting of the mixture of halogenated polyhydroxylated compound and of halogenated alkane, characterized in that it is in the form of a microemulsion and in that it contains a surfactant chosen from the groups of nonionic, ionic: anionic or cationic and amphoteric surfactant.

2. Process for the manufacture of rigid polyurethane and/or polyisocyanurate foam by reaction of polisocyanate with a composition according to claim 1.